# EUROPÄISCHE PATENTSCHRIFT

(11) **EP 0 865 132 B1**
(45) Veröffentlichungstag und Bekanntmachung des Hinweises auf die Patenterteilung: **03.01.2007**
(21) Anmeldenummer: 98102486.2
(22) Anmeldetag: 13.02.1998
(51) Int. Cl.: H02G 5/00

(54) **Vorrichtung zum Befestigen von Stromsammelschienen auf einer Tragschiene**
Device for mounting busbars on a support rail
Dispositif de fixation de barres omnibus sur un rail support

(30) Priorität: 12.03.1997 DE 19710001
(43) Veröffentlichungstag der Anmeldung: 16.09.1998
(73) Patentinhaber: Rittal GmbH & Co. KG, 35745 Herborn (DE)
(72) Erfinder: Wagener, Hans, 35716 Dietzhölztal 2 (DE); Zachrai, Jürgen, 35690 Dillenburg (DE)
(74) Vertreter: Fleck, Hermann-Joseph

(56) Entgegenhaltungen:
- DE-A- 2 944 372
- DE-A- 4 005 138
- DE-U- 8 804 559

## Beschreibung

Die Erfindung betrifft eine Vorrichtung zum Befestigen von Stromsammelschienen mit quadratischem oder rechteckförmigen Querschnitt auf einer Tragschiene mittels elektrisch nichtleitenden, ständerförmigen Halteelemente, die mit der Tragschiene verbindbar sind und eine auf den Querschnitt der Stromsammelschienen abgestimmte Schienenaufnahme bilden.

In der DE 29 44 372 A1 ist eine Vorrichtung zum Befestigen von Stromsammelschienen mit rechteckförmigem Querschnitt auf einer Tragschiene angegeben, wobei auf jeder Tragschiene zum Befestigen einer oder mehrerer Stromsammelschienen ein ständerförmiges Halteelement mit vorgeformten Aufnahmen festgelegt ist.

Die DE 88 04 559 U zeigt eine weitere Vorrichtung zum Befestigen von Stromsammelschienen, wobei ebenfalls ständerförmige Halteelemente mit mehreren eingeformten Aufnahmen für mehrere Stromsammelschienen vorgesehen sind.

Bei einer derartigen Vorrichtung kommt es darauf an, die Stromsammelschienen sehr schnell und eindeutig zu der aus Metall bestehenden Tragschiene isoliert montieren zu können. Dabei sollen einfache Halteelemente verwendet werden können. Dies ist bei den bekannten Vorrichtungen der eingangs erwähnten Art nicht optimal gelöst, da stets einem der gewünschten Aspekte der Vorzug gegeben wird.

Es ist Aufgabe der Erfindung, eine Vorrichtung der eingangs erwähnten Art zu schaffen, die mit einfachen Halte- und Befestigungselementen eine schnelle Anbringung der Stromsammelschienen an der Tragschiene zuläßt und dabei eine eindeutige Isolierung zu der Tragschiene hin sicherstellt.

Diese Aufgabe wird nach der Erfindung dadurch gelöst, daß als Halteelemente an der Tragschiene pro Stromsammelschiene zwei voneinander beabstandet angeordnete, ständerförmige Halter befestigbar sind, deren Abstand auf die Breite der Stromsammelschiene und deren Länge auf die Dicke der Stromsammelschienen abgestimmt sind, dass zwischen den beiden Haltern eine Bodenplatte angeordnet ist, die die Schienen-Aufnahme zu der Tragschiene hin isoliert und die mit an den zur Längsrichtung der Tragschiene parallelen Kanten angeformten Schenkelansätzen zwischen den Haltern gehalten ist, und dass die der Tragschiene abgekehrten Enden der Halter mittels eines Steges verschließbar sind.

Die ständerförmigen Halter werden im abgestimmten Abstand an der Tragschiene festgelegt. Dann wird die Bodenplatte zwischen die Halter eingeschoben und unverlierbar daran gehalten. Die Stromsammelschiene wird in die offene Schienen-Aufnahme eingelegt und mit dem, mit den Haltern verbundenen Steg darin festgehalten. Dazu sind die Halter in der Länge ebenfalls auf die zugeordnete Abmessung der Stromsammelschiene abgestimmt. Auf diese Weise kann die Montage sehr schnell ausgeführt werden und die Schienen-Aufnahme ist nach allen Seiten hin durch die aus elektrisch nichtleitendem Material bestehenden Halteelmente - Halter, Bodenplatte und Steg - isoliert.

Eine Montageerleichterung ergibt sich nach einer Ausgestaltung dadurch, dass die Halter einen quadratischen Außenquerschnitt aufweisen, und in einer im Querschnitt U-förmigen Tragschiene unverdrehbar festgelegt sind.

Der Befestigungsaufwand kann nach einer weiteren Ausgestaltung dadurch reduziert werden, dass die Halter eine Schraubenaufnahme aufweisen, die der Tragschiene zugekehrt über einen Absatz in eine mit eingesteckter Metallhülse verstärkte Befestigungshülse übergeht, dass in die Schraubenaufnahme eine Befestigungsschraube einführbar ist, die in ein auf die Befestigungshülse abgestimmtes Gewindeteil ausläuft und in eine Gewindebohrung der Tragschiene einschraubbar ist, und dass die Befestigungsschraube in dem dem Steg zugekehrten Schraubenkopf mit einer Gewindeaufnahme für die Steg-Befestigungsschraube versehen ist. Außerdem sichern diese Art von Befestigungsschrauben die einfache Vormontage der Halter.

Zur Verbesserung der Verschraubungen ist nach einer Ausgestaltung vorgesehen, dass sich die Befestigungsschraube unter eine Beilegscheibe und einen Federring an der Befestigungshülse des Halters abstützt, und dass sich die Steg-Befestigungsschraube über eine Beilegscheibe und eine Federscheibe in einer im Durchmesser abgesetzten Stegaufnahme versenkt abstützt.

Ist vorgesehen, dass der Halter um die Schraubenaufnahme und die Befestigungshülse als Hohlkörper ausgebildet ist, dann können die Halter als einfache und kostengünstige Kunststoff-Spritzgußteile hergestellt werden.

Die Einführung der Befestigungsschrauben in den Halter unter Beibehaltung ihrer freien Verdrehbarkeit wird dadurch erleichtert und verbessert, dass die Schraubenaufnahme mit längsgerichteten Führungsstegen versehen ist, die den Durchmesser der Schraubenaufnahme auf den Schaftdurchmesser der Befestigungsschraube reduzieren, den Abschnitt zur Aufnahme des Schraubenkopfes jedoch nicht belegen.

Die unverlierbare Festlegung der Bodenplatte an den beiden, auf der Tragschiene befestigten Haltern wird auf einfache Weise dadurch erreicht, dass die Bodenplatte H-förmig ausgebildet ist und mit den Schenkelansätzen die parallel zur Längsrichtung der Tragschiene verlaufenden Außenseiten der benachbarten Halter zumindest teilweise überdeckt.

Ist dabei nach vorgesehen, dass die Bodenplatte an den zur Längsrichtung der Tragschiene zugekehrten Schenkelsätzen mit Abdeckabschnitten versehen ist, die die Außenseiten der Seitenschenkel der U-förmigen Tragschiene abdecken, dann wird die Schienen-Aufnahme zur Tragschiene hin vollständig isoliert.

Die Herstellung des Steges wird dadurch ebenfalls erleichtert und verbilligt, dass der Steg auf der den Haltern zugekehrten Seite um die Stegaufnahmen ausgespart und als Hohlkörper ausgebildet ist.

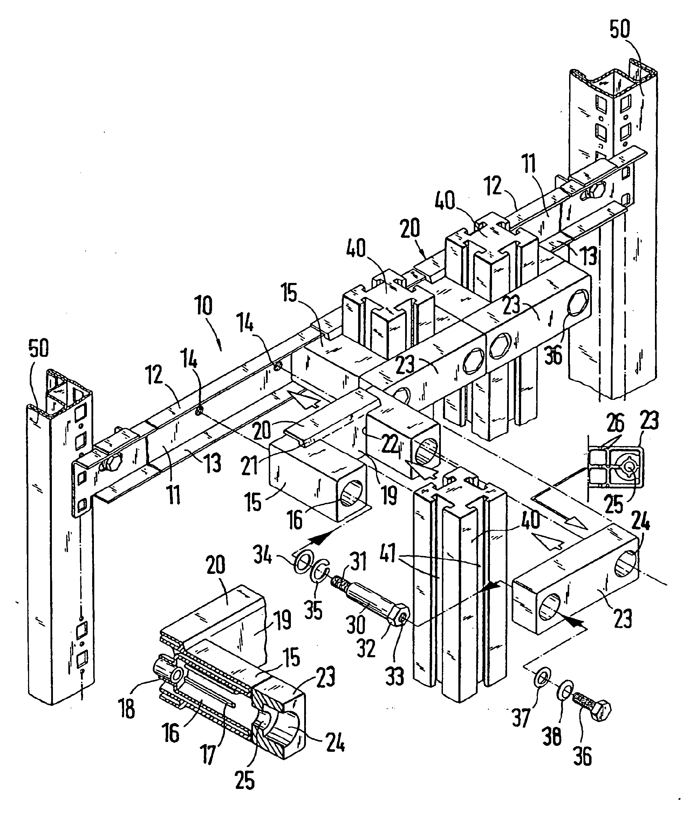

Die Erfindung wird anhand eines in der Zeichnung dargestellten Ausführungsbeispieles eines Dreiphasen-Sammelschienensystemes näher erläutert.

Die im Sammelschienensystem verwendeten Stromsammelschienen 40 haben im Wesentlichen quadratischen Querschnitt. In ihre Außenlängsseiten sind durchgehende T-Nuten eingebracht.

Zwischen zwei Rahmenschenkel 50 oder Montageschienen eines Schaltschrankes ist eine Metall-Tragschiene 10 befestigt, die mit dem Basisschenkel 11 und den Seitenschenkeln 12 und 13 U-förmig ausgebildet ist und mit der offenen Seite den zu befestigenden Stromsammelschienen 40 zugekehrt ist. In dem Basisschenkel 11 sind Gewindebohrungen 14 eingebracht, um in gewünschten Abständen ständerförmige Halter 15 befestigen zu können. Diese Halter 15 sind als Kunststoff-Spritzgußteile hergestellt und weisen quadratischen Außenquerschnitt auf, der so gewählt ist, daß die Halter 15 unverdrehbar zwischen die Seitenschenkel 12 und 13 der Tragschiene 10 festgelegt werden können. Wie der Teilschnitt erkennen läßt, ist der Halter 15 als zur Tragschiene hin entformbarer Hohlkörper ausgebildet, der eine in eine mit eingesteckter Metallhülse versteifte Befestigungshülse 18 auslaufende Schraubenaufnahme 16 aufweist. Mit einer Befestigungsschraube 30, deren Schaft in ein im Durchmesser reduziertes Gewindeteil 31 ausläuft, kann unter Einfügung einer Beilegscheibe 34 und eines Federringes 35 der Halter 15 an der Tragschiene 10 befestigt werden. Dabei stützt sich der Übergang des Schaftes zum Gewindeteil 31 der Befestigungsschraube 30 über den Federring 35 und die Beilegscheibe 34 an dem Übergang von der Schraubenaufnahme 16 zu der mit Metallhülse versteiften Befestigungshülse 18 ab. In der Schraubenaufnahme 16 sind längsgerichtete Führungsstege 17 für den Schaft der Befestigungssschraube 30 angeformt, die zu den Enden der Schraubenaufnahme 16 hin einen Freiraum freilassen, damit der Schraubenkopf 32 der Befestigungsschraube 30 in der Schraubenaufnahme 16 frei drehbar ist. In den Schraubenkopf 32 ist eine Gewindeaufnahme 33 eingebracht.

Bilden zwei beabstandete Halter 15 eine Schienen-Aufnahme, die in der Breite auf die Breite der Stromsammelschiene 40 abgestimmt ist, dann wird zwischen die beiden Halter 15 eine Bodenplatte 19 eingelegt, die auf die Breite der Schienen-Aufnahme abgestimmt ist. An den zur Längsrichtung der Tragschiene 10 parallelen Kanten sind Schenkelansätze 21 angeformt, die sich teilweise über die zugekehrten Außenseiten der beiden benachbarten Halter 15 erstrecken. Auf diese Weise ist die H-förmige Bodenplatte 19 unverlierbar an den Haltern 15 gehalten, kann jedoch senkrecht in der Schienen-Aufnahme verstellt und zur Anlage an der Tragschiene 10 gebracht werden. Die Schenkelansätze 21 liegen dann auf den Stirnseiten der Seitenschenkel 12 und 13 der Tragschiene 10 auf und decken diese isoliert ab. An den Schenkelansätzen 21 sind zudem Abdeckabschnitte 20 angeformt, die die Außenseiten der Seitenschenkel 12 und 13 der Tragschiene 10 abdecken.

Die Länge der Halter 15 ist auf die Höhe der Stromsammelschiene 40 abge-stimmt, so daß diese nach dem Einbringen in die so vorbereitete Schienen-Aufnahme bündig mit den freien Enden der mit der Tragschiene 10 verbundenen Halter 15 abschließt. Die Schienen-Aufnahme wird dann mit einem Steg 23 verschlossen, der zwei Stegaufnahmen 24 für Steg-Befestigungsschrauben 36 aufweist. Diese Stegaufnahmen 24 sind im Durchmesser abgesetzt und nehmen den Schraubenkopf der Steg-Befestigungsschrauben 36 versenkt auf. Die Steg-Befestigungsschrauben 36 werden durch eine Federscheibe 38 und eine Beilegscheibe 37 geführt und stützen sich im Steg 23 ab. Ihre Gewindeteile werden in die Gewindeaufnahmen 33 der Befestigungsschrauben 30 eingeschraubt, so daß der Steg 23 an den Haltern 15 befestigt ist und die Stromsammelschiene 40 in der Schienen-Aufnahme festlegt.

Wie die Teilrückansicht des Steges 23 zeigt, ist die den Haltern 15 zugekehrte Seite des Steges 23 ausgespart und als Hohlkörper ausgebildet, der nur durch Wände 26 versteift bzw. abgeschlossen ist.

## Patentansprüche

1. Vorrichtung zum Befestigen von Stromsammelschienen (40) mit quadratischem oder rechteckförmigem Querschnitt auf einer Tragschiene (10) mittels elektrisch nichtleitender ständerförmiger Halteelemente, die mit der Tragschiene (10) verbindbar sind und eine auf den Querschnitt der Stromsammelschienen (40) abgestimmte Schienenaufnahme bilden,
**dadurch gekennzeichnet,**
**dass** als Halteelemente an der Tragschiene (10) pro Stromsammelschiene (40) zwei voneinander beabstandet angeordnete, ständerförmige Halter (15) befestigbar sind, deren Abstand auf die Breite der Stromsammelschiene (40) und deren Länge auf die Dicke der Stromsammelschienen (40) abgestimmt sind,
**dass** zwischen den beiden Haltern (15) eine Bodenplatte (19) angeordnet ist, die die Schienen-Aufnahme zu der Tragschiene (10) hin isoliert und die mit an den zur Längsrichtung der Tragschiene (10) parallelen Kanten angeformten Schenkelansätzen (21) zwischen den Haltern (15) gehalten ist, und
**dass** die der Tragschiene (10) abgekehrten Enden der Halter (15) mittels eines Steges (23) verschließbar sind.

2. Vorrichtung nach Anspruch 1,
**dadurch gekennzeichnet,**
**dass** die Halter (15) einen quadratischen Außenquerschnitt aufweisen, und in einer im Querschnitt U-förmigen Tragschiene (10) unverdrehbar festgelegt sind.

3. Vorrichtung nach Anspruch 1 oder 2,
**dadurch gekennzeichnet,**
**dass** die Halter (15) eine Schraubenaufnahme (16) aufweisen, die der Tragschiene (10) zugekehrt über einen Absatz in eine mit eingesteckter Metallhülse verstärkte Befestigungshülse (18) übergeht,
**dass** in die Schraubenaufnahme (16) eine Befestigungsschraube (30) einführbar ist, die in ein auf die Befestigungshülse (18) abgestimmtes Gewindeteil (31) ausläuft und in eine Gewindebohrung (14) der Tragschiene (10) einschraubbar ist, und
**dass** die Befestigungsschraube (30) in dem dem Steg (23) zugekehrten Schraubenkopf (32) mit einer Gewindeaufnahme (33) für die Steg-Befestigungsschraube (36) versehen ist.

4. Vorrichtung nach Anspruch 3,
**dadurch gekennzeichnet,**
**dass** sich die Befestigungsschraube (30) über eine Beilegscheibe (34) und einen Federring (35) an der Befestigungshülse (18) des Halters (15) abstützt, und
**dass** sich die Steg-Befestigungsschraube (36) über eine Beilegscheibe (37) und eine Federscheibe (38) in einer im Durchmesser abgesetzten Stegaufnahme (24) versenkt abstützt.

5. Vorrichtung nach Anspruch 3 oder 4,
**dadurch gekennzeichnet,**
**dass** der Halter (15) um die Schraubenaufnahme (16) und die Befestigungshülse (18) als Hohlkörper ausgebildet ist.

6. Vorrichtung nach einem der Ansprüche 3 bis 5,
**dadurch gekennzeichnet,**
**dass** die Schraubenaufnahme (16) mit längsgerichteten Führungsstegen (17) versehen ist, die den Durchmesser der Schraubenaufnahme (16) auf den Schaftdurchmesser der Befestigungsschraube (30) reduzieren, den Abschnitt zur Aufnahme des Schraubenkopfes (32) jedoch nicht belegen.

7. Vorrichtung nach einem der Ansprüche 1 bis 6,
**dadurch gekennzeichnet,**
**dass** die Bodenplatte (19) H-förmig ausgebildet ist und mit den Schenkelansätzen (21) die parallel zur Längsrichtung der Tragschiene (10) verlaufenden Außenseiten der benachbarten Halter (15) zumindest teilweise überdeckt.

8. Vorrichtung nach Anspruch 7,
**dadurch gekennzeichnet,**
**dass** die Bodenplatte (19) an den zur Längsrichtung der Tragschiene (10) zugekehrten Schraubenansätzen (21) mit Abdeckabschnitten (20) versehen ist, die die Außenseiten der Seitenschenkel (12, 13) der U-förmigen Tragschiene (10) abdecken.

9. Vorrichtung nach einem der Ansprüche 1 bis 8,
**dadurch gekennzeichnet,**
**dass** der Steg (23) auf der den Haltern (15) zugekehrten Seite um die Stegaufnahmen (24) ausgespart und als Hohlkörper ausgebildet ist.

## Claims

1. Apparatus for securing busbars (40), having a quadrangular or rectangular cross-section, on a supporting bar (10) by means of electrically non-conductive column-like retaining members, which are connectable to the supporting bar (10) and form a bar receiver, which is adapted to the cross-section of the busbars (40), **characterised in that**, as the retaining members, two spaced-apart, column-like holders (15) are securable on the supporting bar (10) per busbar (40); the spacing therebetween being adapted to the width of the busbar (40), and the length of said holders being adapted to the thickness of the busbars (40), **in that**, between the two holders (15), a bottom plate (19) is disposed, which insulates the bar receiver towards the supporting bar (10), and which is retained between the holders (15), by portion shoulders (21) provided on the edges parallel to the longitudinal direction of the supporting bar (10), and **in that** the ends of the holders (15), remote from the supporting bar (10), are closable by means of a web (23).

2. Apparatus according to claim 1, **characterised in that** the holders (15) have a quadrangular external cross-section, and are fixed in a non-rotatable manner in a supporting bar (10), which has a U-shaped cross-section.

3. Apparatus according to claim 1 or 2, **characterised in that** the holders (15) have a screw receiver (16) which, facing the supporting bar (10), extends via a shoulder into a securing sleeve (18) which is reinforced by an inserted metal sleeve, **in that**, into the screw receiver (16), a securing screw (30) can be introduced, which projects into a threaded portion (31), adapted to the securing sleeve (18), and can be screwed into a threaded bore (14) of the supporting bar (10), and **in that** the securing screw (30) is provided, in the screw head (32) facing the web (23), with a threaded receiver (33) for the web securing screw (36).

4. Apparatus according to claim 3, **characterised in that** the securing screw (30) is supported, via a spacer disc (34) and a resilient ring (35), on the securing sleeve (18) of the holder (15), and **in that** the web securing screw (36) is supported in a countersunk manner, via a spacer disc (37) and a resilient disc (38), in a web receiver (24) which is reduced in diameter.

5. Apparatus according to claim 3 or 4, **characterised in that** the holder (15) is in the form of a hollow body around the screw receiver (16) and the securing sleeve (18).

6. Apparatus according to one of claims 3 to 5, **characterised in that** the screw receiver (16) is provided with longitudinally orientated guide webs (17), which reduce the diameter of the screw receiver (16) to the shaft diameter of the securing screw (30), but which do not cover the portion for receiving the screw head (32).

7. Apparatus according to one of claims 1 to 6, **characterised in that** the bottom plate (19) is H-shaped and covers at least partially, with the portion shoulders (21), the external sides of the adjacent holders (15) which extend parallel to the longitudinal direction of the supporting bar (10).

8. Apparatus according to claim 7, **characterised in that** the bottom plate (19) is provided, on the screw shoulders (21) facing the longitudinal direction of the supporting bar (10), with cover portions (20) which cover the external sides of the lateral portions (12, 13) of the U-shaped supporting bar (10).

9. Apparatus according to one of claims 1 to 8, **characterised in that** the web (23), on the side facing the holders (15), is recessed around the web receivers (24) and is in the form of a hollow body.

## Revendications

1. Dispositif de fixation de barres omnibus (40) de section carrée ou rectangulaire sur un rail porteur (10) au moyen d'éléments de maintien électriquement non conducteurs en forme de montants qui peuvent être assemblés au rail porteur (10) et constituent un logement de barre adapté à la section des barres omnibus (40),
**caractérisé en ce que**, comme éléments de maintien, deux supports (15) en forme de montants disposés à distance l'un de l'autre peuvent être fixés sur le rail porteur (10) pour chaque barre omnibus (40), supports dont l'écartement est adapté à la largeur de la barre omnibus (40) et la longueur à l'épaisseur des barres omnibus (40),
**en ce qu'**une plaque de base (19) est disposée entre les deux supports (15), qui isole le logement de barre vis-à-vis du rail porteur (10) et qui est maintenue entre les supports (15) par des appendices (21) en forme de branches formés sur les bords parallèles à la direction longitudinale du rail porteur (10),
et **en ce que** les extrémités des supports (15) qui sont opposées au rail porteur (10) peuvent être fermées au moyen d'une barrette (23).

2. Dispositif selon la revendication 1, **caractérisé en ce que** les supports (15) présentent une section carrée et sont immobilisés sans possibilité de rotation dans un rail porteur (10) à section en U.

3. Dispositif selon la revendication 1 ou 2, **caractérisé**
**en ce que** les supports (15) présentent un logement de vis (16) qui, vers le rail porteur (10), se poursuit par l'intermédiaire d'un décrochement par une douille de fixation (18) renforcée par une douille métallique insérée,
**en ce qu'**une vis de fixation (30) peut être introduite dans le logement de vis (16), vis qui débouche dans une partie filetée (31) adaptée à la douille de fixation (18) et qui peut être vissée dans un perçage fileté (14) du rail porteur (10),
et **en ce que** la vis de fixation (30) est pourvue, dans la tête de vis (32) tournée vers la barrette (23), d'un logement fileté (33) pour la vis (36) de fixation de la barrette.

4. Dispositif selon la revendication 3, **caractérisé**
**en ce que** la vis de fixation (30) s'appuie par l'intermédiaire d'une rondelle plate (34) et d'une rondelle-ressort (35) contre la douille de fixation (18) du support (15),
et **en ce que** la vis (36) de fixation de la barrette s'appuie de manière noyée, par l'intermédiaire d'une rondelle plate (37) et d'une rondelle-ressort (38), dans un logement (24) de la barrette dont le diamètre est étagé.

5. Dispositif selon la revendication 3 ou 4, **caractérisé en ce que** le support (15) est réalisé sous forme de corps creux autour du logement de vis (16) et de la douille de fixation (18).

6. Dispositif selon l'une des revendications 3 à 5, **caractérisé en ce que** le logement de vis (16) est pourvu de nervures de guidage longitudinales (17) qui réduisent le diamètre du logement de vis (16) au diamètre du corps de la vis de fixation (30) mais n'occupent pas la partie destinée à recevoir la tête de vis (32).

7. Dispositif selon l'une des revendications 1 à 6, **caractérisé en ce que** la plaque de base (19) est réalisée en H et, par les appendices (21) en forme de branches, recouvre au moins partiellement les côtés extérieurs des supports voisins (15) qui s'étendent parallèlement à la direction longitudinale du rail porteur (10).

8. Dispositif selon la revendication 7, **caractérisé en ce que** la plaque de base (19) est pourvue, sur les appendices (21) en forme de branches tournés vers la direction longitudinale du rail porteur (10), de parties de recouvrement (20) qui recouvrent les côtés extérieurs des branches latérales (12, 13) du rail porteur (10) en forme de U.

9. Dispositif selon l'une des revendications 1 à 8, **caractérisé en ce que** la barrette (23) est réalisée, sur le côté tourné vers les supports (15), évidée autour des logements (24) de la barrette et sous forme de corps creux.
